# EUROPÄISCHE PATENTSCHRIFT

(11) **EP 0 759 447 B1**
(45) Veröffentlichungstag und Bekanntmachung des Hinweises auf die Patenterteilung: **17.07.2002**
(21) Anmeldenummer: 96112761.0
(22) Anmeldetag: 08.08.1996
(51) Int. Cl.: C08F 259/08

(54) **Fluorkautschuke, ein Verfahren zu deren Herstellung sowie ein Verfahren von Fluorelastomeren und deren Verwendung**
Fluorine containing rubbers, process for their preparation, process for the preparation of fluoroelastomers and their use
Caoutchoucs fluorés, un procédé pour leur préparation ainsi qu'un procédé de préparation d'élastomères fluorés et leur utilisation

(30) Priorität: 21.08.1995 DE 19530636
(43) Veröffentlichungstag der Anmeldung: 26.02.1997
(73) Patentinhaber: BAYER AG, 51368 Leverkusen (DE)
(72) Erfinder: Krüger, Ralf, Dr., 51061 Köln (DE); Douzinas, Konstandinos, Dr., 51061 Köln (DE); Ackermann, Jürgen, Dr., 51381 Leverkusen (DE)

(56) Entgegenhaltungen:
- EP-A- 0 140 207
- EP-A- 0 711 788
- WO-A-92/20743
- DE-A- 4 023 657
- US-A- 4 243 770
- US-A- 4 748 223

## Beschreibung

Die vorliegende Erfindung betrifft reaktive und verarbeitbare Fluorkautschuke, ein Verfahren zu deren Herstellung, ein Verfahren zur Herstellung von vernetzten, bepfropften oder modifizierten Fluorelastomeren unter Einsatz der reaktiven und verarbeitbaren Fluorkautschuke und deren Verwendung.

Fluorpolymere werden in der Technik immer dann eingesetzt, wenn besondere Eigenschaften, wie niedrige Oberflächenspannung oder hohe Temperatur-, Chemikalien- sowie Lösungsmittelbeständigkeit, verlangt werden. Für die Verwendung auf dem Fluorelastomergebiet müssen die Fluorkautschuke nach der Formgebung vernetzt werden.

Die gebräuchlichsten Vernetzungstypen für Fluorkautschuke sind die bisphenolische bzw. bisaminische und die peroxidische Vernetzung. Peroxidisch vernetzte Fluorkautschuke bieten im Vergleich zu aminisch oder bisphenolisch vernetzten eine höhere Beständigkeit gegenüber Säuren, Basen, Wasserdampf und in Kraftfahrzeugen verwendeten Ölen, die aggressive nucleophile Additive enthalten, siehe Ullmann's Encyclopedia of Industrial Chemistry, 5. Auflage, 1993, Vol. A 23, Chapter 2.6, S. 265-269.

Während eine aus den Monomerbausteinen Vinylidenfluorid (VDF), Hexafluorpropen (HFP) und gegebenenfalls Tetrafluorethylen (TFE) bestehende Copolymerkette durch Amine oder Bisphenole in Gegenwart geeigneter Katalysatoren direkt angegriffen werden kann und Vernetzungsbrücken nach vorheriger HF-Eliminierung an den besonders exponierten HFP-VDF-HFP-Sequenzen geschaffen werden können, lassen sich wegen der hohen Bindungsenergien im fluorierten Polymerrückgrat keine Vernetzungsreaktionen durch Radikale einleiten.

Eine durch Radikale eingeleitete (peroxidische) Vernetzung an solchen Fluorkautschuken mit Fluorgehalten > 60 % ist nur möglich, wenn diese entsprechende Reaktivgruppen (Cure-sites) enthalten. Dabei handelt es sich hauptsächlich um Brom und/oder Iodreste, die kovalent an die Polymerkette gebunden sind. Die Einführung in die Polymerkette geschieht entweder durch Copolymerisation mit bromhaltigen Monomeren, im einfachsten Fall mit Bromtrifluorethylen (US-A-4 035 565, US-A-4 035 586) oder durch Reaktion mit Verbindungen, die Iod oder Iod und Brom, z.B. 1,2-Diiodethan, 1-Brom-2-iodethan, enthalten (US-A-4 243 770; JP-A-53 125 491 und JP-A-63 308 008). Während der nachfolgenden Vernetzung können die Brom- oder Iodsubstituenten leicht abstrahiert und an den dabei resultierenden Radikalstellen mittels Covernetzer Vernetzungsbrücken geschaffen werden. Hier bleibt das fluorierte Rückgrat zwar unbeschädigt und damit stabiler als bei einem bisphenolisch vernetzten Fluorkautschuk, es treten aber während der Vulkanisation toxische Spaltprodukte, wie Methylbromid oder - iodid auf, die aus der Sicht der Arbeitsplatzhygiene als bedenklich gelten und zudem Probleme bezüglich Formverschmutzung und Metallhaftung bereiten.

Einerseits erfordert es zusätzlichen Aufwand, diese teuren Cure-sites einzuführen, andererseits werden die Halogensubstituenten während der Vulkanisation wieder abgespalten und sind somit kein Bestandteil der Vernetzungsbrücken.

Von nur Brom-Cure-sites enthaltenden Fluorkautschuken ist bekannt, daß diese zwar eine gute thermische Stabilität, aber schlechte Vulkanisationseigenschaften, wie langsame Vulkanisation, Formverschmutzung etc., zeigen.

Dagegen weisen Produkte, die nur durch Regelung mit Diiodverbindungen hergestellt wurden, schlechte Alterungseigenschaften, insbesondere in der Heißluftalterung auf.

Lange Zeit war es für Iod-/Brom-Cure-sites enthaltende Fluorkautschuke eine zwingende Voraussetzung, daß der Iod-/Bromgehalt pro Kette bei nahe 2 oder größer liegt, weil anderenfalls keine vollständige Vulkanisation möglich ist (US-A-4 948 852).

Fluorkautschuke mit deutlich mehr als 0,1 mol% Iod- (Brom-)endgruppen haben jedoch den Nachteil, daß diese schwierig herstellbar sind, da Polymerisationen von Fluormonomeren in Gegenwart größerer Mengen der iod-/bromhaltigen Regler stark verlangsamt werden und diese bei der Vulkanisation große Mengen toxischer Iod- und/oder Bromalkyle abspalten und diese darüber hinaus schlechte Heißluftalterungseigenschaften zeigen, siehe V. Arcella et al., Kautsch. Gummi, Kunstst. 44 (1991) 833-837.

WO-92 120 743-A1, DE-A1-40 23 657, US-A-4,748,223, sowie US-A-4,243,770 offenbaren Mischverfahren, bei denen Fluorkautschuke in Gegenwart von Peroxiden gemischt werden. Es sind keine Scher-Vorgänge vergleichbar mit denen der vorliegenden Erfindung beschrieben.

Aufgabe der vorliegenden Erfindung war daher die Bereitstellung verarbeitbarer und radikalisch vernetzbarer Fluorkautschuke mit seitenständigen Doppelbindungen und geringen Mengen Iod- und/oder Bromendgruppen, die gute Verarbeitungseigenschaften wie Fließfähigkeit, Entformbarkeit oder keine Formverschmutzung sowie gute mechanische und Alterungseigenschaften im vernetzten Zustand aufweisen und zudem mit geringem Aufwand herstellbar sind.

Überraschenderweise wurde nun gefunden, daß diese Aufgabe mit den erfindungsgemäßen Fluorkautschuken, die aus bestimmten F-haltigen polymerisierten Monomereinheiten, mit einem sehr geringen Anteil an endständigen Iod- und/oder Bromresten, bestimmten Verbindungen, die
- eine zur Addition an polymere Radikalbruchstücke befähigte Doppelbindung (I) sowie
- Π-Elektronensysteme, die entweder selbst in Konjugation zu der Doppelbindung (I) stehen oder in Allyl- oder Benzylstellung leicht übertragbare Wasserstoffatome besitzen sowie
- gegebenenfalls weitere Doppelbindungen oder reaktive Gruppen besitzen,
und gegebenenfalls weiteren Zusatzstoffen mittels mechanischer Scherung erhältlich sind, erfüllt wird.

Gegenstand der vorliegenden Erfindung sind daher reaktive und verarbeitbare Fluorkautschuke, erhältlich durch mechanische Scherung von
- mindestens einem Fluorpolymer A), das aus polymerisierten Monomereinheiten von mindestens einem fluorierten, gegebenenfalls mit weiteren Halogenatomen substituierten, linearen oder verzweigten C₂-C₈-Alken und gegebenenfalls in kombination mit perfluorierten Vinylethern, nicht fluorierten Olefinen und/oder nicht fluorierten Vinylestern sowie im Falle von Fluorkautschukkombinationen weiterhin einer ausreichenden Menge einer Vinylverbindung mit Chlor, Alkyl- oder Alkoxy-Substituenten sowie
   0,006 bis 0,1 mol%, vorzugsweise 0,01 bis 0,07 mol% kovalent an die endständigen C-Atome der Polymerkette gebundenen Iod und/oder Bromresten besteht und
- 0,3 bis 10 Gew.-%, vorzugsweise 1 bis 7 Gew.-% Verbindungen B), die eine zur Addition an polymere Radikalbruchstücke befähigte Doppelbindung (I) sowie
   Π-Elektronensysteme, die entweder selbst in Konjugation zu der Doppelbindung (I) stehen oder in Allyl- oder Benzylstellung leicht abstrahierbare Wasserstoffatome und gegebenenfalls weitere Doppelbindungen oder reaktive Gruppen besitzen sowie
- gegebenenfalls weiteren Hilfsstoffen C).

Fluorpolymere A), die 0,006 - 0,1 mol% kovalent an den C-Atomen der Kettenenden gebunde Iod und/oder Bromatome enthalten, können bekanntermaßen durch die Polymerisation von Fluormonomeren entweder in Gegenwart von Kettenübertragungsmitteln, die Iod oder Brom und Iod enthalten (z.B. analog US 4 243 770) oder durch Redoxinitiatorsysteme, bei denen Br- oder Iodradikale gebildet werden (z.B. analog zu EP-A 407 937), hergestellt werden.

Die im Sinne der Erfindung zum Einsatz gelangenden Fluorpolymere A) werden z.B. durch radikalische Polymerisation mindestens eines Fluoromonomeren welches ein fluoriertes, gegebenenfalls mit weiteren Halogenatomen, substituiertes, lineares oder verzweigtes C₂-C₈-Alken darstellt, in Gegenwart von 0,2 bis 2 Gew.-%, bezogen auf die umzusetzenden Fluormonomeren, einer iod- und/oder bromhaltigen Verbindung, die für die an endständige C-Atome der Polymerkette gebundenen Iod- und/oder Bromreste verantwortlich sind, gegebenenfalls in Kombination mit perfluorierten Vinylethern, nicht fluorierten Olefinen und/oder nicht fluorierten Vinylestern hergestellt, wobei es sich vorzugsweise um fluorierte, gegebenenfalls substituierte Ethylene, die neben Fluor Wasserstoff und/oder Chlor tragen können, wie z.B. Vinylidenfluorid, Tetrafluorethylen und Chlortrifluorethylen, um fluorierte 1-Alkene mit 2-8 Kohlenstoffatomen, wie z.B. Hexafluorpropen, 3,3,3-Trifluorpropen, Chlorpentafluorpropen, Hexafluorisobuten, um perfluorierte Vinylether der Formel CF₂=CF-O-X mit X=C₁-C₃-Perfluoralkyl oder -(CF₂-CFY-O-)ₙR_{F}, wobei n=1-4, Y=F oder CF₃ und R_{F}=C₁-C₃-Perfluoralkyl bedeuten, sowie nichtfluorierte, lineare oder verzweigte, acyclische oder cyclische Olefine, wie z.B. Ethylen, Propen, Isobuten oder Vinylester, z.B. Vinylacetat, handelt. Für Fluorkautschukkombinationen ist es notwendig, daß das Polymer neben den Ethylenen genügend Vinylverbindungen mit größeren Substituenten als F oder H, wie Chlor, Alkyl oder Alkoxygruppen, gleichmäßig über alle Polymerketten verteilt enthält, so daß die Kristallisation wirksam unterdrückt wird. In der Regel sind dies >14 Mol-%. Besonders bevorzugt sind Fluorkautschukcopolymere, die sich aus Vinylidenfluorid (CF₂=CH₂), Hexafluorpropen (CF₂=CF-CF₃) sowie gegebenenfalls Tetrafluorethylen (CF₂= CF₂) und/oder perfluorierten Vinylethern, wie z.B. Perfluor-(methyl-vinyl-ether), zusammensetzen.

Brom- und/oder iodhaltige Verbindungen im Sinne der Erfindung sind Verbindungen mit der allgemeinen Formel R Iₙ mit n = 1 oder 2 oder R IBr, wobei R ein aliphatischer, aromatischer oder olefinischer Fluorkohlenstoff-, Kohlenwasserstoff-, Fluorkohlenwasserstoff-, Fluorchlorkohlenstoff- oder Fluorchlorkohlenwasserstoffrest sein kann.

Vorzugsweise sind dies Iodide wie Iodpropan, Iodisopropan, Iodbutan, Iodpentan und Iodhexan, perfluorierte Iodide, wie Iodperfluormethan, Iodperfluorpropan, Iodperfluorbutan, Iodperfluorpentan, 1-Iodperfluor-n-nonan, 1-Iodperfluordekan, Iodperfluorcyclobutan, 2-Iodperfluor-(1-cyclobutyl)-ethan und Iodperfluorcyclohexan, teilfluorierte Iodide wie 2-Iod-1-hydroperfluorethan, 3-Iod-1-hydroperfluorpropan und 1-Iod-2-hydroperfluorpropan, iodhaltige perfluorierte Olefine, wie Iodtrifluorethen, 3-Iodperfluorpropen-1, 4-Iodperfluorpenten-1 und 2-Iodperfluor-(1-cyclobutenyl)-ethan, iodhaltige perfluorierte Ether, wie 2-Iodperfluorethyl-perfluorvinylether und 2-Iodperfluorethyl-perfluorisopropylether, Diiodide, wie Diiodmethan, 1,2-Diiodethan, 1,3-Diiodpropan, 1,4-Diiod-n-butan, 1,5-Diiod-n-pentan und 1,6-Diiod-n-hexan, perfluorierte Diiodide, wie 1,2-Diiodperfluorethan, 1,3-Diiodperfluor-n-propan, 1,4-Diiodperfluor-n-butan, 1,5-Diiodperfluorn-pentan, 1,6-Diiodperfluor-n-hexan, 1,8-Diiodperfluor-n-oktan, 1,12-Diiodperfluor-n-dodekan und 1,6-Diiodperfluor-n-hexadekan sowie Brom- und Iod-haltige Verbindungen gemäß DE-A 3 710 818. Redoxinitiatorsysteme im Sinne der Erfindung, bei denen während der Polymerisation Brom- oder Iodradikale erzeugt werden, sind Kombinationen aus Oxydationsmitteln, wie Peroxidisulfat, Permanganat, Perborat etc. und Iodwasserstoffsäure (HI) und/oder Bromwasserstoffsäure (HBr) oder deren Salze von Metallen sowohl der Gruppen I, IIA, IIB der Periodischen Tabelle, wie z.B. Li, Na, K, Rb, Cs, Be, Mg, Ca, Sr, Ba, Cu, Ag, Zn und Cd als auch der Übergangsmetalle wie z.B. Fe, Co, Ni, Ru, Rh, Pd und Pt oder auch der Gruppen III und IVB der Periodischen Tabelle wie z.B. Al, Ga, Sn und Pb. Besonders bevorzugt sind die Alkali- oder Erdalkaliiodide.

Die im Sinne der Erfindung zum Einsatz gelangende Verbindung B) ist eine Verbindung, die eine zur Addition an ein polymeres Radikalbruchstück befähigte Doppelbindung (I) besitzt.

Dies kann jede in 1-, 1,1- oder 1,2-Stellung substituierte Kohlenstoff-Kohlenstoff-Doppelbindung sein, soweit deren Reaktivität gegenüber Radikalen nicht durch elektronische oder sterische Einflüsse beeinträchtigt ist. Desweiteren besitzen die Verbindungen B) Π-Elektronensysteme, die entweder selbst in Konjugation zu der Doppelbindung (I) stehen oder in Alkyl- oder Benzylstellung leicht übertragbare Wasserstoffatome besitzen. Π-Elektronensysteme sind aromatische, olefinische oder neben Kohlenstoff Heteroatome enthaltende Doppelbindungen.

Besonders bevorzugt sind Verbindungen aus der Gruppe

R^{1a}R²C=CR^{1b}-CH₂-Z(R³ ₚR⁴ ₘR⁵ ₙ) (1)

R^{1a}R²C=CR^{1b}-Z(R³ ₚR⁴ ₘR⁵ ₙ) (2)

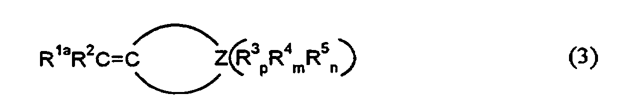

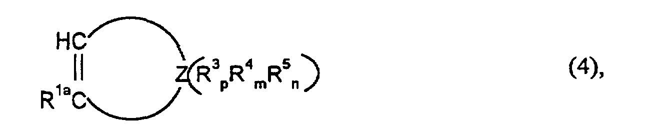

die einzeln oder im Gemisch vorliegen können,
wobei R^{1a} und R ^{1b} unabhängig voneinander H, F, oder C₁-C₆-Alkyl-Resten,
R² H oder F, entsprechen;
Z ein acyclischer oder cyclischer aliphatischer oder aromatischer organischer oder anorganischer Rest ist, der als R³R⁴R⁵ weitere Alkenylgruppen und/oder reaktive Gruppen, wie z.B. Pentafluorphenyl, -CF₂-CN, -OH, Säuregruppen und deren Derivate trägt,
wobei p, m und n Zahlenwerte von 0 bis 3 annehmen können und
die Summe aus p + m + n maximal 3 beträgt und R³, R⁴ und R⁵ voneinander verschieden oder gleich sein können,
entsprechen.

Vorzugsweise ist Komponente B) ein Di- oder Triallyl- bzw. methallylester mehrwertiger organischer oder anorganischer Säuren, wie z.B. Alkenyl-cyanurate oder -isocyanurate, wie Triallylcyanurat bzw. -isocyanurat oder Trimethallyl-isocyanurat, Diallylphthallat, Triallylphosphat, Triallylcitrat, Triallylmellitat, Trimethyltriallyl-cyclotrisiloxan und/oder Di- oder Triallyl- bzw. -methallylether zwei- oder dreiwertiger Alkohole (Diole oder Triole) inclusive Acetale, wie z.B. Trimethylolpropan-trimethallylether und/oder acyclische und cyclische Di- oder Triene, wie z.B. 1,4- bzw. 1,5-Hexadien oder 1,4-Pentadien, Myrcen, Limonen, Norbornadien, Ethylidennorbornen, Dicyclopentadien, und/oder Verbindungen, die neben einer oder mehreren Doppelbindungen gespannte Ringe enthalten, wie z.B. α-Pinen oder Norbornen und/oder am Phenylring substituierte Styrol- oder α-Methylstyrolderivate, wie z.B. p-Isopropenyl-phenylacetat und Pentafluorstyrol.

Besonders bevorzugt sind solche Verbindungen B), die mehrere olefinische Doppelbindungen enthalten und nach der Addition an die Polymerkette noch mindestens eine übrigbehalten. In besonders bevorzugter Weise ist Verbindung B) eine Kombination aus Triallylisocyanurat oder Triallylcyanurat mit Trimethallylisocyanurat und/oder α-Pinen und/oder Limonen und/oder Myrcen und/oder Ethylidennorbornen.

Der Molekulargewichtsabbau während der Scherung von Fluorpolymeren A) in Gegenwart von Verbindungen B) kann gegebenenfalls durch Zugabe von Verbindungen C) gefördert werden.

In einer Ausführungsform der vorliegenden Erfindung enthält daher das reaktive und verarbeitbare Fluorpolymer neben den Verbindungen A) und B) noch Hilfsstoffe C), die vorzugsweise leicht oxydierbare hydroxy- und carboxygruppenhaltige organische Verbindungen, wie z.B. Oxalsäure, Bernsteinsäure, Apfelsäure, Weinsäure, Zitronensäure, Ascorbinsäure, Folsäure sowie Glycol, Glycerin, klassische Mastizierhilfsmittel, wie z.B. Pentachlorthiophenol, dessen Zinksalz oder 2,2'-Dibenzamido-diphenyldisulfid sowie als Sauerstoffüberträger wirkende Eisen-, Kupfer-, Kobalt-, Nickel- oder Chromkomplexe des Phthalocyanins oder Acetylacetonats, iod- und/oder bromhaltige Verbindungen, Alterungsschutzmittel oder Radikalinhibitoren, wie z.B. substituierte aromatische Amine, Phenole bzw. Chinone, z.B. Benzochinon, Pyrogallol (2,3-Dihydroxyphenol), 1,5-Di-t-butyl-p-kresol oder N-substituierte p-Phenylendiamine oder Gemische daraus.

Bevorzugte Hilfsstoffe C) sind Oxalsäure, Bernsteinsäure, Apfelsäure, Weinsäure, Zitronensäure, Ascorbinsäure, Folsäure sowie Glycol, Glycerin, Pentachlorthiophenol, dessen Zinksalz oder 2,2'-Dibenzamido-diphenyldisulfid sowie Eisen-, Kupfer-, Kobalt-, Nickel- oder Chromkomplexe des Phthalocyanins oder Acetylacetonats, Benzochinon, Pyrogallol (2,3-Dihydroxyphenol), 1,5-Di-t-butyl-p-kresol oder N-substituierte p-Phenylendiamine oder Gemische daraus.

Die reaktiven und verarbeitbaren Fluorpolymere enthalten vorzugsweise 0,1 bis 5 Teile Hilfsstoffe C) pro 100 Teile Fluorpolymer A).

Der durchschnittliche Gehalt an Iod- oder Bromendgruppen pro Kette kann bei Iod-/Bromgehalten nahe der Untergrenze von 0,006 mol% kleiner als 1 sein und ist bei Iod-/Bromgehalten von 0,1 mol% größer als 1. (Berechnung aus dem Quotienten Iod-/Brom-Endgruppengehalt : Summe aller Endgruppen, z.B. aus Initiator, Lösungsmittel, Br, I, usw. ).

Gegenstand der vorliegenden Erfindung ist auch ein Verfahren zur Herstellung reaktiver und verarbeitbarer Fluorpolymere, wonach mindestens ein Fluorpolymer A) mit mindestens einer Verbindung B) und gegebenenfalls Verbindungen C) unter dem Einfluß mechanischer Scherung umgesetzt werden.

Für die in dem erfindungsgemäßen Verfahren durchgeführte mechanische Scherung können bekannte Mischaggregate, wie z.B. Zweiwalzenmischwerk, Stempelkneter, Brabendermischer, Doppelwellenextruder usw. genutzt werden.

Die Verarbeitungstemperatur hängt vom Aggregat und von der Ausgangsviskosität des Fluorpolymers ab. Sie sollte möglichst tief aber oberhalb der Glastemperatur des entsprechenden Fluorpolymers A) liegen.

In den erfindungsgemäßen Verfahren liegt die Verarbeitungstemperatur vorzugsweise oberhalb der Glastemperatur des Fluorpolymers A) und die Scherdauer beträgt ≥ 1 min.

Die Anfangstemperatur bei Anwendung eines geschlossenen Aggregats sollte 120°C nicht übersteigen und mit zunehmendem Abbau sowie in Abhängigkeit von der gewünschten Endviskosität sukzessive abgesenkt werden. Bei Verarbeitung auf einem Zweiwalzenmischwerk kann die Massetemperatur von Kautschuken unter 60°C gehalten werden. Die Verweilzeiten im Scherfeld hängen ebenso vom Aggregattyp ab und liegen bevorzugt zwischen 5 und 60 min.

Die dabei resultierenden modifizierten Fluorkautschuke enthalten chemisch gebunden seiten- und/oder endständige Reaktivgruppen, bevorzugt olefinische Doppelbindungen, die mindestens das 5-fache der Brom- und/oder Iodreste ausmachen.

Gegenstand der vorliegenden Erfindung ist zudem ein Verfahren zur Herstellung von vernetzten, bepfropften oder modifizierten Fluorkautschuken, wonach die erfindungsgemäßen reaktiven und verarbeitbaren Fluorkautschuke in radikalischer Additions-, nucleophilen oder elektrophilen Substitutions- oder Additionsreaktionen eingesetzt werden.

In Abhängigkeit von der chemischen Natur der eingeführten Reaktivgruppen werden zur Vernetzung, Pfropfung oder Modifizierung niedermolekulare, oligomere oder polymere Verbindungen benötigt, die entsprechende funktionelle Gruppen enthalten. So können die erfindungsgemäßen Fluorkautschuke für den Fall, daß es sich bei den eingeführten Reaktivgruppen um Pentafluorphenyl- oder Säuregruppen bzw. deren Derivate handelt, mit Nucleophilen oder Bisnucleophilen, wie beispielsweise 2,2-Bis-(4-hydroxyphenyl)-propan oder Hexamethylendiamin, umgesetzt werden. Für den bevorzugten Fall, daß die erfmdungsgemäßen Fluorkautschuke seiten- oder endständige olefinische Doppelbindungen enthalten, können diese auf radikalischem Wege, durch Strahlung oder radikalbildende Substanzen, wie organische Peroxide, oder durch spezielle Mechanismen, wie beispielsweise SiH-Addition, gepfropft oder vernetzt werden. Die bei einer peroxidischen Vulkanisation üblichen Mischungsbestandteilen, wie Füllstoffe, Säureakzeptoren, Covernetzer und Peroxid können nach bekannten Methoden eingemischt und die resultierende Mischung im Anschluß an die Formgebung vulkanisiert werden.

Die erfindungsgemäßen Fluorkautschuke zeigen nach der Modifizierung unter dem Einfluß mechanischer Scherung in Gegenwart von Verbindungen B) gute Fließfähigkeiten als Voraussetzung für eine gute Formfüllung und damit ein gutes Verarbeitungsverhalten. Als Maß für diese Eigenschaft dient der Mooney-Wert bei 120°C, ML(120°C), der bei den erfindungsgemäßen Fluorkautschuken kleiner oder gleich 100 ist sowie das durch Torsionsschubvulkameter-Messungen an einem Monsanto-Rheometer des Typs MDR 2000 E bei 170°C gemessene Drehmoment s' (∼ Speichermodul) das ≤ 2 dNm beträgt. Aufgrund der Reaktivität der erfindungsgemäßen Fluorkautschuke können die Fluorkautschuke nach der Compoundierung (= Einmischen von Füllstoffen und Vulkanisationshilfsmitteln, wie Covernetzer, Katalysator) zu Netzwerken mit mittleren Netzbogenlängen (= mittleres Molekulargewicht einer Fluorkautschukkette zwischen zwei Vernetzungspunkten (Bestimmung durch ein modifiziertes Mooney-Rivlin-Verfahren) von ≤ 30 000 g/mol vernetzt werden.

Die erfindungsgemäßen Vulkanisationsmischungen zeichnen sich durch geringe Klebrigkeit und Formverschmutzung aus. Es resultieren homogene Netzwerke, welche die Grundlage für geringe Druck- oder Zugverformungsreste bilden.

Gegenstand der vorliegenden Erfindung ist ebenfalls die Verwendung der reaktiven und verarbeitbaren Fluorkautschuke zur Vernetzung, Bepfropfung oder weiteren polymeranalogen Umsetzungen.

Die vorliegende Erfindung wird durch die nachstehenden Beispiele näher erläutert. Die Erfindung ist jedoch nicht auf die Beispiele beschränkt.

### Ausführungsbeispiele

### Beispiel 1

### A - Rohpolymer

In einem 36-1-Autoklaven wurden 25,2 kg entionisiertes Wasser und 30,1 g Lithiumperfluoroctylsulfonat vorgelegt. Darin wurden 40 g Oxalsäure-Dihydrat und 20,7 g Diiodmethan gelöst, wobei sich in der gesamte wäßrigen Vorlage ein pH-Wert von 3,0 einstellte. Der geschlossene Autoklav wurde viermal jeweils evakuiert anschließend mit 3 bar Stickstoffdruck beaufschlagt und jeweils 10 min langsam gerührt. In den evakuierten Autoklaven wurden 268 g Vinylidenfluorid und 367 g Hexafluorpropen gegeben und das Reaktionsgemisch unter Rühren auf 25°C erwärmt. Nach Erreichen dieser Temperatur betrug der Autoklaveninnendruck 9,5 bar. Die Polymerisation wurde eingeleitet durch die Zugabe von 53 ml einer wäßrigen Lösung, die 20g/l Kaliumpermanganat enthielt. Sofort nach der einmaligen Zugabe wurde die besagte Lösung kontinuierlich mit einer Rate von 39ml/h weiterdosiert. An der beginnenden Druckabnahme erkennbar, setzte die Polymerisation nach 50 min ein. Während der Polymerisation wurde ein Monomergemisch aus 60 Gew.% Vinylidenfluorid und 40 Gew.% Hexafluorpropen so nachgedrückt, daß der Autoklaveninnendruck konstant auf 9,4±0,2 bar gehalten wurde. Innerhalb einer Reaktionszeit von 540 min wurden auf diese Weise insgesamt 4,1 kg Vinylidenfluorid und 2,9 kg Hexafluorpropen zugepumpt. Zur Beendigung der Polymerisation wurde die Permanganatdosierung abgebrochen, das nicht umgesetzte Monomergemisch durch Entspannung und Evakuierung aus dem Reaktor entfernt und der verbleibende Autoklaveninhalt abgekühlt. Es wurden 32,8 kg einer koagulatfreien wäßrigen Dispersion mit einem Feststoffgehalt von 20,0 % erhalten.

Der Latex wurde zum Koagulieren des Produktes langsam unter Rühren in 6 kg einer wäßrigen Fällvorlage, in der 180g Calziumchlorid gelöst waren, gegossen. Das abfiltrierte Produkt wurde mit Wasser gewaschen und dann 24h bei 50°C in einem Vakuumtrockenschrank getrochnet, wobei 6,3 kg eines kautschukartigen Copolymers erhalten wurden. Durch ¹⁹F-NMR-Analysen wurde folgende Copolymerzusammensetzung bestimmt: 21,5 mol.% Hexafluorpropen, 78,5 mol.% Vinylidenfluorid. Der durch Elementaranalyse bestimmte Iodgehalt des Polymers beträgt 0,062 Gew.-% (= 0,04 mol%).

Das Copolymer ist in THF und DMAC vollständig löslich. Das durch Torsionsschubvulkameter-Messungen an einem Monsanto-Rheometer des Typs MDR 2000 E bei 170°C gemessene Drehmoment s' beträgt 4,3 dNm nach 1min Meßzeit. Eine Mooney-Viskosität kann an diesem Produkt nicht mehr gemessen werden, da der typische Meßbereich nach oben überschritten wird.

### B - Herstellung eines reaktiven und verarbeitbaren Fluorkautschuks

Zur Herstellung eines radikalisch vernetzbaren und gut verarbeitbaren Fluorkautschuks wurden 500g des nach obiger Beschreibung hergestellten iodhaltigen Copolymers unter dem Einfluß der Scherung auf einem gut gekühlten Standardwalzwerk (150x350) bei einem Walzenspalt von 0,2mm und bei einer Walzendrehzahl von 20 min⁻¹ (vordere Walze) bzw. 15 min ⁻¹ (hintere Walze) mit einer Mischung aus 15 g Perkalink 301/50 (Triallylisocyanurat, 50 %ig in Calciumsilicat als inaktivem Füllstoff), 5 g Limonen (Dipenten Racemat) und 2,5 g Ascorbinsäure umgesetzt. Die Umsetzung wurde nach 20 min Scherzeit beendet. Am resultierenden Kautschuk wurden Mooney-Viskositäten und Drehmomente s'(170°C) bestimmt (Ergebnisse in Tab. 1).

### C - Vulkanisatherstellung

Zur Herstellung einer vulkanisierfähigen Mischung wurden auf dem oben beschriebenen Zweiwalzenmischwerk bei einer Spaltbreite von 1mm 300 g des in oben beschriebener Weise modifizierten Kautschuks mit 90 g Ruß MT N 990, 9 g Calciumhydroxid, 3 g Perkalink 301/50 (Triallylisocyanurat, 50 %ig in Calciumsilicat als inaktivem Füllstoff) und 9 g Luperco 130 XL (2,5-Dimethyl-2,5-bis(tertiärbutyl)-hex-3-in; 45 %ig in Calciumsilicat als inaktivem Füllstoff) zu einer vulkanisierfähigen compoundiert.

An dieser Mischung wurde durch Torsionsschubvulkameter-Messungen an einem Monsanto-Rheometer des Typs MDR 2000 E bei 170°C das Fließverhalten vor der Anvulkanisation sowie der Anstieg der Vernetzungsdichte anhand des Verlaufs der Drehmomente s' (∼ Speichermodul) bzw. s" (∼ Verlustmodul) untersucht. Um die mechanischen Eigenschaften des vulkanisierten Produktes zu untersuchen, wurde die genannte vulkanisierfähige Mischung bei 170°C und 200bar in einer Form (1x10x10 mm) 30min druckvulkanisiert und anschließend in einem Umluftofen nachvulkanisiert (1 h bei 160°C, 1 h bei 170°C, 2 h bei 180°C und 20 h bei 200 °C). Die MDR-Ergebnisse (s'ₘᵢₙ bzw. s'ₘₐₓ = Drehmomente im Minimum, vor der Anvulkanisation, bzw. Maximum, nach 30min, sowie die entsprechenden Verlustfaktoren tanδ = s"/s') und mechanischen Eigenschaften sind in Tabelle 1 eingetragen. Die Bestimmung der mittleren Netzbogenlänge erfolgte mit Hilfe eines modifizierten Mooney-Rivlin-Verfahrens, d.h. nach 10-facher zyklischer Vordehnung der Proben zur Zerstörung sämtlicher physikalischer Netzstellen. Das Ergebnis, Tabelle 1, zeigt, daß die auf diesem Wege bestimmte mittlere Netzbogenlänge etwa um den Faktor 20 kleiner ist als jener Wert, der sich aus dem eingebauten Iod als Reaktivstelle errechnen läßt, d.h. der überwiegende Teil der Vernetzungsstellen wird aus den während der vorangegangenen Scherung eingeführten Reaktivgruppen gebildet.

### Beispiel 2

Die Polymerisation wurde in analoger Weise wie in Beispiel 1 durchgeführt, wobei das Diiodmethan nicht vorgelegt, sondern als Lösung (100 g/l) in Frigen R 113 (1,1,2-Trichlor-1,2,2-Trifluorethan) kontinuierlich mit einer Geschwindigkeit von 40 ml/h zudosiert wurde. Nach einer Reaktionszeit von 280 min wurden 4,7 kg Vinylidenfluorid, 3,1 kg Hexafluorpropen und 12,8 g Diiodmethan zudosiert. Der Feststoffgehalt des Latex betrug 23,7%. Das Produkt wurde wie in Beispiel 1 isoliert, weiterverarbeitet und untersucht.
Zusammensetzung: 21,4 mol.% Hexafluorpropen, 78,6 mol.% Vinylidenfluorid
Iodgehalt: 0,07 Gew.-% (→ 0,045 mol%)
Chlorgehalt: 0,01 Gew.-% (→ 0,023 mol%)
s'(170°C): 2,5 dNm

### Beispiel 3

Die Polymerisation wurde in analoger Weise wie in Beispiel 2 durchgeführt, wobei die Lösung des Diiodmethans in Frigen R 113 (100 g/l) über eine Zeitspanne von 5h kontinuierlich mit einer Geschwindigkeit von 28 ml/h zudosiert wurden. Nach einer Reaktionszeit von 375 min waren 4,7 kg Vinylidenfluorid, 3,1 kg Hexafluorpropen und 14,2 g Diiodmethan zudosiert. Der Feststoffgehalt des Latex betrug 23,1%. Das Produkt wurde wie in Beispiel 1 isoliert, weiterverarbeitet und untersucht.
Zusammensetzung: 21,4 mol.% Hexafluorpropen, 78,6 mol.% Vinylidenfluorid
Iodgehalt: 0,09 Gew.-% (→ 0,057 mol%)
Chlorgehalt: 0,02 Gew.-% (→ 0,046 mol%)
s'(170°C): 1,6 dNm

### Beispiel 4

### A - Rohpolymer

In einem 36-1-Autoklaven wurden 25,1 kg entionisiertes Wasser und 30,2 g Lithiumperfluoroctylsulfonat vorgelegt. Darin wurden 29,2 g Oxalsäure-Dihydrat - gelöst und durch Zugabe von LiOH wurde in der gesamte Vorlage ein pH-Wert von 3,0 eingestellt. Der geschlossene Autoklav wurde viermal jeweils evakuiert anschließend mit 3 bar Stickstoffdruck beaufschlagt und jeweils 10 min langsam gerührt. In den evakuierten Autoklaven wurden 268 g Vinylidenfluorid und 367 g Hexafluorpropen gegeben und das Reaktionsgemisch unter Rühren auf 35°C erwärmt. Nach Erreichen dieser Temperatur betrug der Autoklaveninnendruck 9,9 bar. Die Polymerisation wurde eingeleitet durch die Zugabe von 100 ml einer wäßrigen Lösung, die 20g/l Kaliumpermanganat enthielt. Sofort nach der einmaligen Zugabe wurde die besagte Lösung kontinuierlich mit einer Rate von 70 ml/h weiterdosiert. Während der Polymerisation wurde ein Monomergemisch aus 60 Gew.% Vinylidenfluorid und 40 Gew.% Hexafluorpropen so nachgedrückt, daß der Autoklaveninnendruck konstant auf 9,9±0,2 bar gehalten wurde. Nachdem 150g Vinylidenfluorid und 100 g Hexafluoropropen nachgedrückt waren, wurde mit der Dosierung einer 16,7 Gew. % Kaliumiodid-enthaltenden wäßrigen Lösung mit einer Rate von 50 ml/h begonnen. Innerhalb einer Reaktionszeit von 568 min wurden auf diese Weise insgesamt 4,5 kg Vinylidenfluorid, 2,9 kg Hexafluorpropen und 448 ml Kaliumiodid Lösung zugepumpt. Die Polymerisation wurde, wie in Beispiel 1 beschrieben, beendet. Der Feststoffgehalt des koagulatfreien Latex betrug 21,5 %. Der Latex wurde mit einer wässrigen Lösung von Magnesiumsulfat gefällt und das koagulierte Produkt wurde gewaschen und getrocknet.
Zusammensetzung: 20,5 mol.% Hexafluorpropen, 79,5 mol.% Vinylidenfluorid
Iodgehalt: 0,04 Gew.-% (→ 0,026 mol-%)
S'(170°C): 5,01 dNm

Das Produkt wurde in analoger Weise wie in Beispiel 1 weiterverarbeitet und untersucht, wobei die Umsetzung mit Perkalink, Limonen und Ascorbinsäure bei einer Drehgeschwindigkeit beider Walzen von 20 min⁻¹ erfolgte und anschließend 200 g des modifizierten Polymers bei einem Walzenspalt von 0,5 mm mit 60 g Ruß MT N 990, 6 g Calciumhydroxid, 10 g Perkalink 301/50 (Triallylisocyanurat, 50 %ig in inaktivem Füllstoffen) und 8 g Luperco 130 XL (2,5-Dimethyl-2,5-bis(tertiärbutyl)-hex-3-in; 45 %ig in Calciumsilicat als inaktivem Füllstoff) compoundiert und anstatt von 200°C bei 230°C nachgetempert wurden (siehe Tabelle 1).

**Tabelle 1**

| **Beispiel** | 1 | 2 | 3 | 4 |
|---|---|---|---|---|
| **Iodgehalt** | | | | |
| [Gew.-%] | 0,062 | 0,07 | 0,09 | 0,04 |
| [mol-%] | 0,04 | 0,045 | 0,057 | 0,026 |

| **A) Rohpolymer** | | | | |
|---|---|---|---|---|
| s' (170°C) [dNm] | 4,3 | 2,5 | 1,6 | 5,01 |

| **B) modifizierter** **Kautschuk** | | | | |
|---|---|---|---|---|
| ML (120°C) | 88 | 65 | 56 | 87 |
| s' (170°C) [dNm] | 1,45 | 0,86 | 0,68 | 1,5 |

| **C) Vulkanisationsmischung** | | | | |
|---|---|---|---|---|
| MDR/170°C | | | | |
| s'ₘᵢₙ [dNm] | 3,09 | 1,77 | 1,34 | 2,62 |
| Tanδₘᵢₙ | 0,99 | 1,26 | 1,1 | 0,963 |
| s'ₘₐₓ [dNm] | 20,3 | 21,6 | 20,7 | 20,22 |
| tanδₘₐₓ | 0,135 | 0,099 | 0,089 | 0,159 |
| M₁₀₀ | 2,56 | 2,7 | 4,23 | 3,33 |
| Zugfestigkeit [N/mm²] | 22,5 | 22,4 | 16,6 | 21,38 |
| Bruchdehnung [%] | 332 | 305 | 380 | 289 |
| mittlere Netzbogenlänge [kg/mol] | | | | |
| a) nach Mooney-Rivlin | 18,5 | 13,2 | | |
| b) aus Iodgehalt | 410 | 363 | 282 | 318 |

### Beispiel 5

Von den Rohpolymeren der A-Stufe aus den Beispielen 1-3 wurden folgende Mengen in Krümelform miteinander vermischt:
5,4 kg aus Beispiel 1
7,0 kg aus Beispiel 2
6,8 kg aus Beispiel 3

Diese Rohpolymermischung wurde an einem gut gekühlten Walzwerk des Typs 600 x 1800 der Fa. Werner&Pfleiderer bei einem Walzenspalt von 0,2mm und bei einer Walzendrehzahl von 15 min⁻¹ an beiden Walzen mit einer Mischung aus 575 g Perkalink 301/50 (Triallylisocyanurat, 50 %ig in Calciumsilicat als inaktivem Füllstoff), 192 g Limonen (Dipenten Racemat) und 96 g Ascorbinsäure umgesetzt. Die Umsetzung wurde nach einer 30 minütigen Scherzeit beeendet. Die Felltemperatur lag anfänglich bei 52°C und nahm zum Ende hin auf 40°C ab. Der s'-Wert bei 170°C des Kautschuks nahm von anfänglich 2,6 auf 1,37 dNm ab. Der Mooneywert ML(120°C) lag am Ende bei 86.

Anschließend wurde der modifizierte Kautschuk analog der unter Beispiel 1 beschriebenen Prozedur zu einer vulkanisierfähigen Mischung compoundiert und vulkanisiert.

Die Untersuchungsergebnisse sind in Tabelle 2 zusammengestellt.

### Vergleichsbeispiel 1

Analog den Beispielen 1-3, jedoch in Abwesenheit von Diiodmethan und Frigen R 113, wurde ein Fluorkautschuk hergestellt, der einen s'-Wert bei 170°C von 14,3 dNm aufwies.

Wie im Beispiel 5 beschrieben, wurde dieses hochmolekulare Fluorpolymer auf der besagten Walze innerhalb von 90 min weiter umgesetzt sowie vulkanisiert. Die Ergebnisse zeigen im Vergleich zum Beispiel 5, daß das höhermolekulare Ausgangspolymer selbst in der dreifachen Zeit unter den sonst selben Bedingungen nicht auf das niedrige Viskositätsniveau wie das iodhaltige Ausgangspolymer abgebaut werden kann, während vergleichbare Vulkanisateigenschaften eingestellt werden können.

**Tabelle 2**

| **Beispiel** | 5 | |
|---|---|---|
| **Vergleichsbeispiel** | | 1 |
| Iodgehalt [Gew.-%] | 0,075 | 0 |
| [mol%] | 0,048 | 0 |

| **A) Rohpolymer** | | |
|---|---|---|
| s'(170°C) [dNm] | 2,6 | 14,3 |

| **B) modifizierter Kautschuk** | | |
|---|---|---|
| nach Scherzeit [min] | 30 | 90 |
| ML(120°C) | 86 | 120 |
| s'(170°C) [dNm] | 1,37 | 2,6 |

| **C) Vulkanisationsmischung** | | |
|---|---|---|
| MDR/170°C | | |
| s'ₘᵢₙ [dNm] | 2,6 | 4,9 |
| s'ₘₐₓ [dNm] | 22,5 | 22,0 |
| M₁₀₀ [N/mm²] | 3,6 | 3,8 |
| Zugfestigkeit [N/mm²] | 22,0 | 22,7 |
| Bruchdehnung [%] | 358 | 350 |

### Beispiel 6

Die Polymerisation wurde in analoger Weise wie im Beispiel 2 oder 3 durchgeführt, wobei das Diiodmethan als Lösung (500 g/l) in Methylacetat (Essigsäuremethylester) kontinuierlich über eine Zeitspanne von 5 h mit einer Geschwindigkeit von 5,6 ml/h zudosiert wurde. Nach einer Reaktionszeit von 600 min waren 4,0 kg Vinylidenfluorid, 2,64 kg Hexafluorpropen und 14 g Diiodmethan zudosiert. Der Feststoffgehalt des Latex betrug 20,6%. Das Produkt wurde wie in den Beispielen 1-3 isoliert, weiterverarbeitet und untersucht, Tabelle 3.
Zusammensetzung: 21,4 mol.% Hexafluorpropen, 78,6 mol.% Vinylidenfluorid
Iodgehalt: 0,05 Gew.-% (→ 0,032 mol%)
s'(170°C): 2,4 dNm

### Beispiel 7

In einem 195-1-Autoklaven wurden 130 kg entionisiertes Wasser und 667 g einer 30%-igen Lösung von Lithiumperfluoroctansulfonat vorgelegt. Darin wurden 206 g Oxalsäure-Dihydrat gelöst und die gesamte Flotte auf pH 3 mit Lithiumhydroxid eingestellt. Der geschlossene Autoklav wurde viermal jeweils evakuiert anschließend mit 3 bar Stickstoffdruck beaufschlagt und jeweils 10 min langsam gerührt. In den evakuierten Autoklaven wurden 1,2 kg Vinylidenfluorid, 1,5 kg Hexafluorpropen und 220 g Tetrafluorethylen gegeben und das Reaktionsgemisch unter Rühren auf 25°C erwärmt. Nach Erreichen dieser Temperatur betrug der Autoklaveninnendruck 9,6 bar. Die Polymerisation wurde eingeleitet durch die kontinuierliche Zugabe einer wäßrigen Lösung, die 20g/l Kaliumpermanganat enthielt. Während der Polymerisation wurde ein Monomergemisch aus 59,9 Gew.% Vinylidenfluorid, 31,4 Gew.% Hexafluorpropen und 8,7 Gew.% Tetrafluorethylen so nachgedrückt, daß der Autoklaveninnendruck konstant auf 9,6 bar gehalten wurde. Währenddessen wurde eine Lösung von 100 g/l Diiodmethan in Frigen R 113 im Verhältnis 44,8 g/kg Vinylidenfluorid-Dosierung bis zu einem Vinylidenfluorid-Umsatz von 20kg ebenfalls dosiert. Innerhalb einer Gesamtlaufzeit von 230 min wurden auf diese Weise insgesamt 25,0 kg Vinylidenfluorid, 13,1 kg Hexafluorpropen, 3,66 kg Tetrafluorethylen, 889 g Diiodmethanlösung und 765 g Kaliumpermanganatlösung zugepumpt. Die Polymerisation wurde wie im Beispiel 1 beschrieben beendet. Es wurde eine koagulatfreie wäßrige Dispersion mit einem Feststoffgehalt von 24,2 % erhalten. Das Produkt wurde wie in den Beispielen 1-3 isoliert, weiterverarbeitet und untersucht, Tabelle 3.
Copolymerzusammensetzung: 18,1 mol.% Hexafluorpropen, 74,4 mol.% Vinylidenfluorid, 7,5 mol% Tetrafluorethylen
Iodgehalt: 0,04 Gew.-% (→ 0,026 mol%)
Chlorgehalt: 0,002 Gew.-% (→ 0,0046 mol%)
s'(170°C): 4,24 dNm

### Vergleichsbeispiel 2-3

Je 500g der gemäß Beispiel 6 (→ Vergleichsbeispiel 2) und 7 (→ Vergleichsbeispiel 3) hergestellten Copolymere wurden unter den Bedingungen, wie im Beispiel 1 unter "Vulkanisatherstellung" beschrieben worden ist, mit 150 g Ruß MT N 990, 15 g Calciumhydroxid, 20 g Perkalink 301/50 (Triallylisocyanurat, 50 %ig in Calciumsilicat als inaktivem Füllstoff) sowie 15 g Luperco 130 XL (2,5-Dimethyl-2,5-bis(tertiärbutyl)-hex-3-in; 45 %ig in Calciumsilicat als inaktivem Füllstoff) zu einer vulkanisierfähigen Mischung compoundiert. Die ebenfalls in Tabelle 3 eingetragenen Ergebnisse zeigen, daß, obwohl die Vulkanisate nicht modifizierter Fluorpolymere ähnliche mechanische Eigenschaften wie die modifizierten Fluorpolymere besitzen, sie deutlich schlechter verarbeitbar sind, weil sie auch zu hohe S'ₘᵢₙ-Werte besitzen.

**Tabelle 3**

| **Beispiel** | 6 | | 7 | |
|---|---|---|---|---|
| **Vergleichsbeispiel** | | 2 | | 3 |
| **A) Rohpolymer aus Beispiel** | 6 | 6 | 7 | 7 |
| s'(170°C) - Rohpolymer [dNm] | 2,4 | 2,4 | 4,24 | 4,24 |
| **B) modifizierter Kautschuk** | | keine | | keine |
| ML(120°C) | 86 | Modifi- | 103 | Modifi- |
| s'(170°C) [dNm] | 1,37 | zierung | 1,95 | zierung |

| **C) Vulkanisationsmischung** | | | | |
|---|---|---|---|---|
| MDR/170°C | | | | |
| s'ₘᵢₙ [dNm] | | | | |
| s'ₘₐₓ [dNm] | 1,75 | 4,26 | 2,89 | 6,25 |
| | 19,4 | 21,44 | 22,14 | 24,91 |
| | | | | |
| M₁₀₀ | 2,41 | 2,72 | 2,52 | 2,88 |
| Zugfestigkeit [N/mm²] | 23,7 | 21,9 | 24,6 | 24,9 |
| Bruchdehnung | 343 | 307 | 302 | 300 |
| [%] | | | | |

## Patentansprüche

1. Reaktive und verarbeitbare Fluorkautschuke, erhältlich durch mechanische Scherung von
- mindestens einem Fluorpolymer A), das aus polymerisierten Monomereinheiten von mindestens einem fluorierten, gegebenenfalls mit weiteren Halogenatomen substituierten, linearen oder verzweigten C₂-C₈-Alken sowie gegebenenfalls in Kombination mit perfluorierten Vinylethern, nicht fluorierten Olefinen und/oder nicht fluorierten Vinylestem, sowie im Falle von Fluorkautschukkombinationen weiterhin einer ausreichenden Menge einer Vinylverbindung mit Chlor, Alkyl - oder Alkoxy-Substituenten, um die Kristallisation wirksam zu unterdrücken, sowie
0,006 bis 0,1 mol-% kovalent an die endständigen C-Atome der Polymerkette gebunden lod- und/oder Bromresten besteht und
- 0,3 bis 10 Gew.-% Verbindungen B), die eine zur Addition an polymere Radikalbruchstücke befähigte Doppelbindung (I) sowie π-Elektronensysteme, die entweder selbst in Konjugation zu der Doppelbindung (I) stehen oder in Allyl- oder Benzylstellung leicht abstrahierbare Wasserstoffatome und gegebenenfalls weitere Doppelbindungen oder reaktive Gruppen besitzen und
gegebenenfalls weiteren Hilfsstoffen C).

2. Reaktive und verarbeitbare Fluorkautschuke nach Anspruch 1, **dadurch gekennzeichnet, daß** diese mindestens eine Verbindung B) aus der Gruppe
R^{1a}R²C=CR^{1b}-CH₂-Z(R³ ₚR⁴ ₘR⁵ ₙ) (1)
R^{1a}R²C=CR^{1b}-Z(R³ ₚR⁴ ₘR⁵ ₙ) (2) 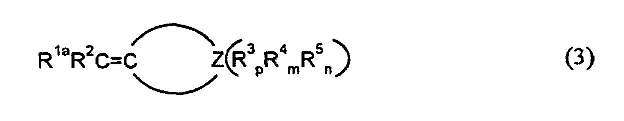 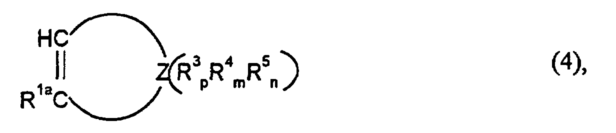
die einzeln oder im Gemisch vorliegen können,
wobei R^{1a} und R^{1b} unabhängig voneinander H, F, oder C₁-C₆-Alkyl-Resten,
R² H oder F entsprechen;
Z ein acyclischer oder cyclischer aliphatischer oder aromatischer organischer oder anorganischer Rest ist, der als R³R⁴R⁵ weitere Alkenylgruppen und/oder reaktive Gruppen trägt,
wobei p, m und n Zahlenwerte von 0 bis 3 annehmen können und
die Summe aus p + m + n maximal 3 beträgt und R³, R⁴ und R⁵ voneinander verschieden oder gleich sein können.

3. Reaktive und verarbeitbare Fluorkautschuke nach einem der Ansprüche 1 bis 2, **dadurch gekennzeichnet, daß** als Verbindungen B) der Gruppen 1 bis 4 Di- oder Triallyl- oder -methallylester mehrwertiger organischer oder anorganischer Säuren und/oder Di- oder Triallyl- oder -methallylether zwei oder dreiwertiger Alkohole inclusive Acetale und/oder acyclische oder cyclische Di- oder Triene und/oder Verbindungen, die neben einer oder mehreren Doppelbindungen gespannte Ringe enthalten und/oder am Phenylring substituierte Styrol- oder α-Methylstyrolderivate sind.

4. Reaktive und verarbeitbare Fluorkautschuke nach einem der Ansprüche 1 bis 3, **dadurch gekennzeichnet, daß** als Verbindungen B) eine Kombination aus Triallylisocyanurat oder Triallylcyanurat mit Trimethallylisocyanurat und/oder α-Pinen, Limonen, Myrcen und/oder Ethylidennorbornen ist.

5. Reaktive und verarbeitbare Fluorkautschuke nach einem der Ansprüche 1 bis 4, **dadurch gekennzeichnet, daß** die Hilfsstoffe C) leicht oxydierbare hydroxy- und carboxygruppenhaltige organische Verbindungen, klassische Mastizierhilfsmittel, als Sauerstoffüberträger wirkende Eisen-, Kupfer-, Kobalt-, Nickel- oder Chromkomplexe des Phthalocyanins oder Acetylacetonats, iod- und/oder bromhaltige Verbindungen, Alterungsschutzmittel oder Radikalinhibitoren oder Gemische daraus sind.

6. Reaktive und verarbeitbare Fluorkautschuke nach Anspruch 5, **dadurch gekennzeichnet, daß** die Hilfsstoffe C) Oxalsäure, Bernsteinsäure, Apfelsäure, Weinsäure, Zitronensäure, Ascorbinsäure, Folsäure sowie Glycol, Glycerin, Pentachlorthiophenol, dessen Zinksalz oder 2,2'-Dibenzamido-diphenyldisulfid sowie Eisen-, Kupfer-, Kobalt-, Nickel- oder Chromkomplexe des Phthalocyanins oder Acetylacetonats, Benzochinon, Pyrogallol (2,3-Dihydroxyphenol), 1,5-Di-t-butyl-p-kresol oder N-substituierte p-Phenylendiamine oder Gemische daraus sind.

7. Reaktive und verarbeitbare Fluorkautschuke nach einem der Ansprüche 1 bis 6, **dadurch gekennzeichnet, daß** die Fluorpolymere 0,1 bis 5 Teile Hilfsstoffe C) pro 100 Teile Fluorpolymer A) enthalten.

8. Reaktive und verarbeitbare Fluorkautschuke nach einem der Ansprüche 1 bis 7, **dadurch gekennzeichnet, daß** diese nach der Compoundierung zu elastomeren Formkörpern mit mittleren Netzbogenlängen von ≤ 30 000 g/mol verarbeitet werden können.

9. Verfahren zur Herstellung von reaktiven und verarbeitbaren Fluorkautschuken nach einem der Ansprüche 1 bis 8, **dadurch gekennzeichnet, daß** mindestens ein Fluorpolymer A) mit den Verbindungen B) und gegebenenfalls Hilfsstoffen C) unter dem Einfluß mechanischer Scherung umgesetzt werden.

10. Verfahren nach Anspruch 9, **dadurch gekennzeichnet, daß** die Verarbeitungstemperatur oberhalb der Glastemperatur des Fluorpolymers A) liegt und die Scherdauer ≥ 1 min beträgt.

11. Verfahren zur Herstellung von vemetzten, bepfropften oder modifizierten Fluorkautschuke, **dadurch gekennzeichnet, dass** reaktive und verarbeitbare Fluorpolymere gemäß Anspruch 1 in radikalischen Additions-, nucleophilen oder elektrophilen Substitutions- oder Additionsreaktionen eingesetzt werden.

12. Verwendung der reaktiven und verarbeitbaren Fluorkautschuke nach einem der Ansprüche 1 bis 9 zur Vernetzung, Bepfropfung oder weiteren polymeranalogen Umsetzungen.

## Claims

1. Reactive and processable fluororubbers obtainable by mechanical shearing of
- at least one fluoropolymer A) which consists of polymerised monomer units of at least one fluorinated linear or branched C₂-C₈ alkene optionally substituted with further halogen atoms and optionally in combination with perfluorinated vinyl ethers, non-fluorinated olefins and/or non-fluorinated vinyl esters together with, in the case of fluororubber combinations, furthermore a sufficient quantity of a vinyl compound having chlorine, alkyl or alkoxy substituents to ensure effective suppression of crystallisation together with
0.006 to 0.1 mol% of iodine and/or bromine residues covalently bonded onto the terminal C atoms of the polymer chain and
- 0.3 to 10 wt.% of compounds B) which have a double bond (I) capable of addition onto polymeric free-radical fragments together with π-electron systems which are either themselves conjugated with the double bond (I) or have readily abstractable hydrogen atoms in allyl or benzyl position and optionally further double bonds or reactive groups, and
- optionally further auxiliary substances C).

2. Reactive and processable fluororubbers according to claim 1, **characterised in that** this compound B), of where there is at least one, is from the group
R^{1a}R²C=CR^{1b}-CH₂-Z (R³ ₚR⁴ ₘR⁵ ₙ) (1)
R^{1a}R²C=CR^{1b}-Z(R³ ₚR⁴ ₘR⁵ ₙ) (2) 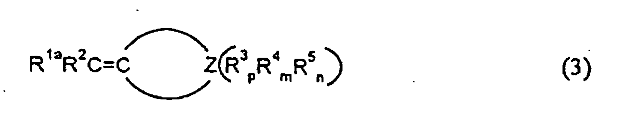 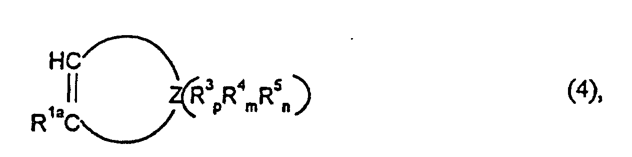
which may be present individually or as a mixture,
wherein R^{1a} and R^{1b} are mutually independently H, F or C₁-C₆ alkyl residues,
R² is H or F;
Z is an acyclic or cyclic aliphatic or aromatic organic or inorganic residue, which, as R³R⁴R⁵ bears further alkenyl groups and/or reactive groups,
wherein p, m and n may assume numeric values of 0 to 3 and
the sum of p + m + n is at most 3 and R³, R⁴ and R⁵ may be identical or different from each other.

3. Reactive and processable fluororubbers according to one of claims 1 to 2, **characterised in that** the compounds B) of groups 1 to 4 are di- or triallyl or methallyl esters of polybasic organic or inorganic acids and/or di- or triallyl or methallyl ethers of di- or trihydric alcohols including acetals and/or acyclic or cyclic di- or trienes and/or compounds which contain stressed rings in addition to one or more double bonds and/or styrene or α-methylstyrene derivatives substituted on the phenyl ring.

4. Reactive and processable fluororubbers according to one of claims 1 to 3, **characterised in that** the compounds B) comprise a combination of triallyl isocyanurate or triallyl cyanurate with trimethallyl isocyanurate and/or α-pinene, limonene, myrcene and/or ethylidenenorbornene.

5. Reactive and processable fluororubbers according to one of claims 1 to 4, **characterised in that** the auxiliary substances C) are readily oxidisable organic compounds containing hydroxy and carboxy groups, conventional masticating auxiliaries, iron, copper, cobalt, nickel or chromium complexes of phthalocyanine or acetylacetonate acting as oxygen transfer agents, compounds containing iodine and/or bromine, antioxidants or free-radical inhibitors or mixtures thereof.

6. Reactive and processable fluororubbers according to claim 5, **characterised in that** the auxiliary substances C) are oxalic acid, succinic acid, malic acid, tartaric acid, citric acid, ascorbic acid, folic acid, together with glycol, glycerol, pentachlorothiophenol, the zinc salt thereof or 2,2'-dibenzamidodiphenyl disulfide together with iron, copper, cobalt, nickel or chromium complexes of phthalocyanine or acetylacetonate, benzoquinone, pyrogallol (2,3-dihydroxyphenol), 1,5-di-t-butyl-p-cresol or N-substituted p-phenylenediamines or mixtures thereof.

7. Reactive and processable fluororubbers according to one of claims 1 to 6, **characterised in that** the fluoropolymers contain 0.1 to 5 parts of auxiliary substances C) per 100 parts of fluoropolymer A).

8. Reactive and processable fluororubbers according to one of claims 1 to 7, **characterised in that**, once compounded, they may be processed into elastomeric mouldings having average network arc lengths of ≤ 30000 g/mol.

9. Process for the production of reactive and processable fluororubbers according to one of claims 1 to 8, **characterised in that** at least one fluoropolymer A) is reacted with the compounds B) and optionally auxiliary substances C) under the action of mechanical shearing.

10. Process according to claim 9, **characterised in that** the processing temperature is above the glass transition temperature of the fluoropolymer A) and the duration of shearing is ≥ 1 minute.

11. Process for the production of crosslinked, grafted or modified fluororubbers, **characterised in that** reactive and processable fluoropolymers according to claim 1 are used in free-radical addition reactions, nucleophilic or electrophilic substitution or addition reactions.

12. Use of the reactive and processable fluororubbers according to one of claims 1 to 9 for crosslinking, grafting or further polymer-type reactions.

## Revendications

1. Caoutchoucs fluorés réactifs et aptes au façonnage, obtenus par cisaillement mécanique de
- au moins un polymère fluoré A) qui consiste en motifs monomères polymérisés d'au moins un alcène fluoré, linéaire ou ramifié, en C₂-C₈, portant le cas échéant d'autres substituants halogéno, éventuellement en combinaison avec des éthers vinyliques perfluorés, des oléfines non fluorées et/ou des esters vinyliques non fluorés ainsi que, dans le cas de combinaisons de caoutchoucs fluorés, une quantité suffisante d'un dérivé vinylique portant des substituants chloro, alkyle ou alcoxy pour inhiber efficacement la cristallisation, et
0,006 à 0,1 mol % de radicaux iodés et/ou bromés fixés par des liaisons covalentes sur les atomes de carbone terminaux de la chaîne polymère, et
- 0,3 à 10 % en poids de composés B) qui possèdent une double liaison (I) apte à la fixation par addition sur des fragments de radicaux polymères et des systèmes d'électrons π qui sont soit conjugués par rapport à la double liaison (I), soit possèdent des atomes d'hydrogène facilement éliminables en position allylique ou benzylique et le cas échéant d'autres doubles liaisons ou groupes réactifs, et
- le cas échéant d'autres produits auxiliaires C).

2. Caoutchoucs fluorés réactifs et aptes au façonnage selon la revendication 1, **caractérisés en ce qu'**il contiennent au moins un composé B) du groupe
R^{1a}R²C=CR^{1b}-CH₂-Z(R³ ₚR⁴ ₘR⁵ ₙ) (1)
R^{1a}R²C=CR^{1b}-Z(R³ ₚR⁴ ₘR⁵ ₙ) (2) 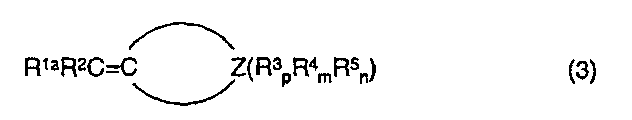 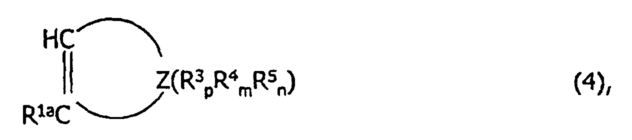
isolément ou en mélange entre eux,
R^{1a} et R^{1b} représentant chacun, indépendamment l'un de l'autre, H, F ou un groupe alkyle en C₁-C₆,
R² représente H ou F ;
Z représente un radical organique aliphatique acyclique ou cydique ou aromatique, ou un radical inorganique qui porte d'autres groupes alcényle et/ou des groupes réactifs R³R⁴R⁵,
p, m et n sont des nombres allant de 0 à 3 et
la somme p + m + n est égale à 3 au maximum, R³, R⁴ et R⁵ pouvant être identiques ou différents.

3. Caoutchoucs fluorés réactifs et aptes au façonnage selon l'une des revendications 1 et 2, **caractérisés en ce que** les composés B) des groupes 1 à 4 sont des esters di- ou tri-allyliques ou -méthallyliques d'acides organiques ou inorganiques polyvalents et/ou des éthers di- ou tri-allyliques ou -méthallyliques d'alcools di- ou tri-valents y compris les acétals et/ou des di- ou tri-ènes acycliques ou cycliques et/ou des composés qui, en plus d'une ou plusieurs doubles liaisons, contiennent des cycles tendus, et/ou des dérivés du styrène ou de l'α-méthylstyrène substitués sur le cycle phényle.

4. Caoutchoucs fluorés réactifs et aptes au façonnage selon l'une des revendications 1 à 3, **caractérisés en ce que** le composé B) consiste en fait une combinaison d'isocyanurate de triallyle ou de cyanurate de triallyle avec l'isocyanurate de triméthyallyle et/ou l'α-pinène, le limonène, le myrcène et/ou l'éthylidènenorbornène.

5. Caoutchoucs fluorés réactifs et aptes au façonnage selon l'une des revendications 1 à 4, **caractérisés en ce que** les produits auxiliaires C) sont des composés organiques contenant des groupes hydroxy et carboxy, des produits auxiliaires classiques de malaxage, des complexes de fer, de cuivre, de cobalt, de nickel ou de chrome de la phtalocyanine ou d'un acétylacétonate faisant fonction d'agents de transfert de l'oxygène, des composés iodés et/ou bromés, des agents de protection contre le vieillissement ou des inhibiteurs de radicaux libres, isolément ou en mélange entre eux.

6. Caoutchoucs fluorés réactifs et aptes au façonnage selon la revendication 5, **caractérisés en ce que** les produits auxiliaires C) sont l'acide oxalique, l'acide succinique, l'acide malique, l'acide tartrique, l'acide citrique, l'acide ascorbique, l'acide folique ou encore le glycol, le glycérol, le pentachlorothiophénol, son sel de zinc ou le disulfure de 2,2'-dibenzamidodiphényle ou des complexes de fer, de cuivre, de cobalt, de nickel ou de la chrome de la phtalocyanine ou d'un acétylacétonate, la benzoquinone, le pyrogallol (2,3-dihydroxyphénol), le 1,5-di-tert-butyl-p-crésol ou des p-phénylènediamines substituées à l'azote, ou des mélanges entre eux.

7. Caoutchoucs fluorés réactifs et aptes au façonnage selon l'une des revendications 1 à 6, **caractérisés en ce que** les polymères fluorés contiennent 0,1 à 5 parties des produits auxiliaires C) pour 100 parties du polymère fluoré A).

8. Caoutchoucs fluorés réactifs et aptes au façonnage selon l'une des revendications 1 à 7, **caractérisés en ce que**, après le mélange, ils peuvent être façonnés en objets moulés élastomères ayant des longueurs moyennes d'arc de réticulation ≤ 30 000 g/mol.

9. Procédé pour la préparation des caoutchoucs fluorés réactifs et aptes au façonnage selon l'une des revendications 1 à 8, **caractérisé en ce que** l'on fait réagir sous l'influence d'un cisaillement mécanique au moins un polymère fluoré A) avec les composés B) et le cas échéant les produits auxiliaires C).

10. Procédé selon la revendication 9, **caractérisé en ce que** la température opératoire est supérieure à la température de transition du second ordre du polymère fluoré A) et **en ce que** la durée du cisaillement est ≥ 1 min.

11. Procédé pour la préparation de caoutchoucs fluorés réticulés, greffés ou modifiées, **caractérisé en ce qu'**on utilise des polymères fluorés réactifs et aptes au façonnage selon la revendication 1, dans des réactions radicalaires d'addition, nucléophiles ou électrophiles de substitution ou d'addition.

12. Utilisation des caoutchoucs fluorés réactifs et aptes au façonnage selon l'une des revendications 1 à 9 pour des réactions de réticulation, de greffage ou d'autres réactions sur polymères.
